# EUROPEAN PATENT SPECIFICATION

(11) **EP 3 941 723 B1**
(45) Date of publication and mention of the grant of the patent: **09.07.2025**
(21) Application number: 19939672.2
(22) Date of filing: 30.07.2019
(51) Int. Cl.: B29C 71/00, B29C 64/379, B24B 57/02, B33Y 40/20

(54) **TREATMENT CHAMBER**
BEHANDLUNGSKAMMER
CHAMBRE DE TRAITEMENT

(43) Date of publication of application: 26.01.2022
(73) Proprietor: Peridot Print LLC, Palo Alto, CA 94304 (US)
(72) Inventor: GASSO PUCHAL, Xavier, 08174 Sant Cugat del Valles (ES); LLUCH SURIOL, Jordi, 08174 Sant Cugat del Valles (ES); DELMAS, Jerome, 38054 Grenoble Cedex (FR); ROUGEAUX, Isabelle, 38054 Grenoble Cedex (FR); FEYDI, Pierre, 38054 Grenoble Cedex (FR)
(74) Representative: Haseltine Lake Kempner LLP
(86) International application number: PCT/US2019/044065
(87) International publication number: WO 2021/021119

(56) References cited:
- WO-A1-2018/127683
- WO-A1-2018/235121
- WO-A1-2019/055557
- CN-A- 104 339 646
- GB-A- 2 560 073
- US-A- 5 083 440
- US-A1- 2019 076 924
- US-B2- 8 075 300

## Description

### BACKGROUND

Chemical polishing systems may be used to reduce the surface roughness of plastic or resin objects, such as those generated in a 3D printer. This can be achieved, for example, by using a treatment agent such as a solvent. It may be desirable to recover as much solvent as possible from the system for re-use. The solvent may be removed from the treatment chamber after the treatment by using absorption techniques or by placing a localized exhaust system to remove solvents present in the system in the form of a vapor and released outside. Any residual chemical agent inside the system may be recovered after the treatment of the objects.

The present invention relates to an apparatus according to claim 1.

WO2018/127683 A1 discloses an apparatus for post-processing an additively manufactured polymer part, comprising a reservoir for containing a liquid solvent; a processing chamber in controllable fluid communication with the reservoir; and a controller configured to controllably post-process an additively manufactured polymer part located in the processing chamber by the solvent responsive to at least one parameter associated with the part. A method for post-processing an additively manufactured polymer part is also provided.

### BRIEF DESCRIPTION OF THE DRAWINGS

Some non-limiting examples of the present disclosure will be described in the following with reference to the appended drawings in which:
Figure 1 is a schematic diagram of an example of the apparatus of the present disclosure.
Figure 1A is a block diagram of a simplified apparatus of the present disclosure according to one example.
Figure 2 is a schematic diagram of an example of the system of the present disclosure.
Figures 3 to 15 are a schematic diagram of an example of the system in use.
Figure 16 is a block diagram of an example of a controller of the present disclosure.

### DETAILED DESCRIPTION

The apparatus of the present disclosure may be employed with respect to objects formed by various 3D printing techniques. An example of an object that may be treated includes a 3D-printed polymer part. Chemical polishing of 3D printed polymer objects is a process that helps to reduce the surface roughness of the objects. The basic technique is the action of a treatment agent that melts the external surface of the polymer material thereby altering the physical characteristics of the surface of the object. The treatment agent may be removed after treatment of the object and recovered for re-use. The altered surface of the object may provide benefits in relation to surface physical characteristics such as surface roughness, color, brightness, appearance, smoothness, gloss and other physical characteristics such as permeability. Other examples of objects to be treated include metals, ceramics and resins. The selection of treatment agent may depend on the nature of the object being treated.

A number of examples will be discussed in detail below. Where like parts in different Figures are discussed, the same reference numeral will be used.

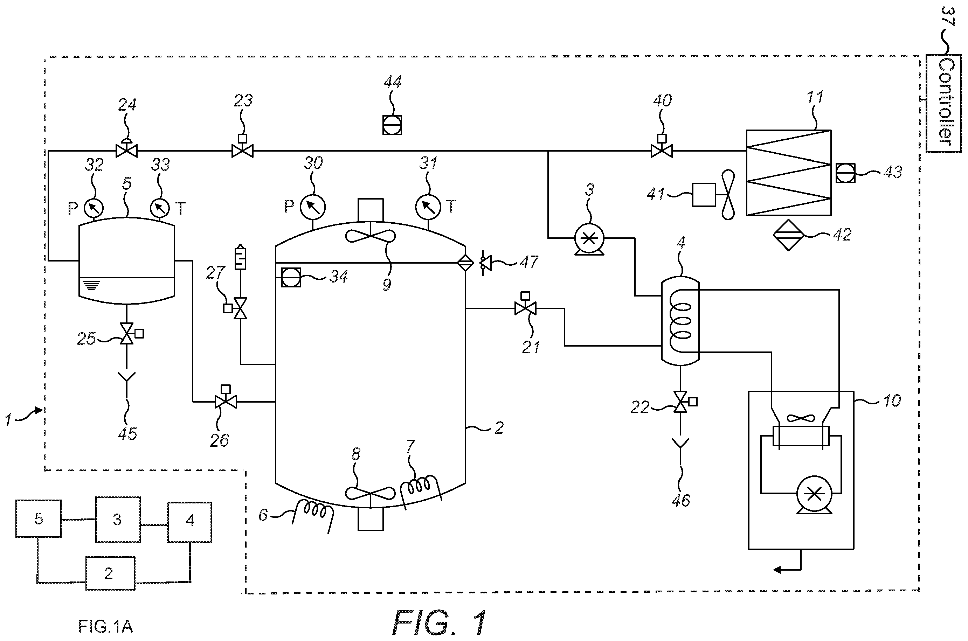

An example of an apparatus for recovering the treatment agent after treatment of the object according to the present disclosure is shown in a simplified manner in Figure 1.

The apparatus 1 includes a pump 3, a condenser 4 and a secondary chamber 5 in fluid communication with a treatment chamber 2. An example of the treatment chamber 2 is a hermetically sealable treatment chamber having an interior to receive the object to the treated. The treatment chamber 2 can be of any size or shape, depending on the size, quantity, or the type of material the objects to be treated are made of. The treatment chamber 2 may be designed such that it can withstand high negative pressure, highly reactive treatment agents such as volatile solvents, temperature and fluid dynamics, as a treatment agent may be circulated around the interior of the treatment chamber 2 in order to evenly cover the surface of the object to be treated. Sensors 30, 31 may be provided, for example within or adjacent the treatment chamber 2, to detect or monitor a condition within the treatment chamber. Conditions can, for example, include the temperature and/or pressure within the treatment chamber 2.

The apparatus 1 may include one or a plurality of heaters 6, 7, of any type, at any location in the apparatus in order to heat the treatment chamber 2. In one example, the heater may be provided on the outside or inside of the treatment chamber. In one example, the heater may be provided at the bottom of the chamber. In another example, heaters may be provided both inside and outside at the bottom of the treatment chamber 2. Any suitable heater can be employed, such as electrically heated coils, a water bath, recirculated hot air and the like.

The apparatus 1 may include one or a plurality of dispersers 8, 9, of any type, at any location in the apparatus in order to disperse the treatment agent in the treatment chamber 2. The dispersers may be provided within the treatment chamber 2. The term disperser can encompass any device that can disperse a fluid. The disperser may be a fan or a fan blade impeller. The disperser can be arranged to disperse treatment agent within the treatment chamber 2 to ensure even coverage of the treatment agent on the object to be treated. In an example, as shown in Figure 1, the disperser 8 may be provided inside at the bottom of the treatment chamber 2 and the disperser 9 may be provided inside at the top of the treatment chamber 2. The size, shape and the number of the disperser, can be designed based on the fluid dynamics needed inside the treatment chamber 2.

In an example, the apparatus 1 includes a heater 7 and a disperser 8 inside at the bottom of the treatment chamber 2 to reduce the amount of residual treatment agent inside the treatment chamber. Furthermore, the provision of an internal heater 7 and a disperser 8 at the bottom of the treatment chamber 2 aids in maximum recovery of the treatment agent once the treatment phase is completed.

As shown in Figure 1, the pump 3 may be connected to the treatment chamber 2. The pump 3 may be a vacuum pump such as a positive displacement pump, an example of which includes a peristaltic pump. The term pump can encompass any device that can evacuate fluid from a closed space. Examples of pump may include a diaphragm pump, a rotary vane pump, a screw pump, a piston pump, a turbo pump, in single or multi-stage configuration.

In the example shown in Figure 1, the pump 3 is connected to the treatment chamber 2 via the condenser 4 to draw a treatment fluid from the treatment chamber 2. Valve 21 may be provided to control the flow of the treatment fluid from the treatment chamber 2 to the condenser 4.

The term condenser can encompass any device which is capable of condensing at least a portion of a fluid. The condenser 4 may be a type of heat exchanger. The condenser 4 may include coils for heat exchange. The condenser may be connected to a chiller 10.

In an example, the condenser 4 can be connected directly to a refrigerant gas from chiller 10 so that the cooling side of the condenser 4 is the evaporator side of the chiller 10. In this way, the intermediate circulating liquid, used to transfer the heat from the condenser 4 to the chiller 10 can be eliminated.

Valve 23 may be provided in the connection between the condenser 4 and the secondary chamber 5 to control the flow of the non-condensate portion of the treatment fluid to the secondary chamber 5. Valve 24 may be provided in the connection between the condenser 4 and the secondary chamber 5 to control the pressure. An example of the valve 24 is a back-pressure valve.

As shown in Figure 1, the secondary chamber 5 is in fluid communication with the treatment chamber 2 depending on the position of a valve 26 located between the secondary chamber 5 and the treatment chamber 2. The secondary chamber 5 may be subject to high pressure, and exposed to highly reactive treatment agents, so the design of the secondary chamber 5 may need to take these conditions into account. The design of the secondary chamber 5 may also take into account fluid dynamics, as the non-condensate portion of the treatment fluid from the condenser 4 may be compressed under pressure to form a secondary condensate portion and a secondary non-condensate portion of the treatment fluid. The secondary chamber 5 may be substantially smaller than the treatment chamber 2. In an example, the secondary chamber 5 may have a volume of less than 90 percent of the volume of the treatment chamber 2. In an example, the secondary chamber 5 may have a volume of less than 80 percent of the volume of the treatment chamber 2. In an example, the secondary chamber 5 may have a volume of less than 50 percent of the volume of the treatment chamber 2. In an example, the secondary chamber 5 may have a volume of less than 25 percent of the volume of the treatment chamber 2. In an example, the secondary chamber 5 may have a volume of between 90 and 25 percent of the volume of the treatment chamber 2.

In an example, the size of the secondary chamber 5 may be substantially smaller than the treatment chamber 2 such that it forms a pressure in the secondary chamber 5 to facilitate condensation of the non-condensate portion of the treatment fluid. The secondary chamber 5 may be designed such that it facilitates natural condensation of the treatment fluid received from the condenser 4.

Sensors 32, 33 may be provided, for example within or adjacent the secondary chamber 5, to detect or monitor a condition within the secondary chamber 5. Conditions can, for example, include the temperature and/or pressure within the secondary chamber 5.

As shown in Figure 1, the secondary chamber 5 is in fluid communication with the treatment chamber 2 to allow the secondary non-condensate portion of the treatment agent to flow to the treatment chamber 2. The valve 26 may be provided on the connection to control the flow of the secondary non-condensate portion to the treatment chamber 2.

The design of the secondary chamber 5 is such that in use the pressure in the treatment chamber 2 is lower than the pressure in the secondary chamber 5.

In an example, the secondary chamber 5 is in fluid communication with the pump 3, the condenser 4 and the treatment chamber 2 to form a closed loop system.

In an example, the secondary chamber 5, the pump 3, and the condenser 4 may form a treatment agent recovery system. The treatment agent recovery system may be connected to the treatment chamber 2.

In an example, the secondary chamber 5 may act as a reservoir for storing the non-condensate portion of the treatment fluid for later use.

In an example, the secondary chamber 5 may be connected to the treatment chamber 2 directly or indirectly. The secondary chamber 5 may be connected to one or a plurality of additional chambers to further condense the treatment agent as required.

The non-condensate portion in the secondary or additional chambers may be either stored for later use or recycled to the treatment chamber 2 as required.

The apparatus 1, may include a Volatile Organic Compounds (VOC) trap 11 to remove the treatment fluid from the treatment chamber 2. The VOC trap 11 may be a filter that can absorb traces of the treatment agent in the treatment fluid before it is released to the atmosphere. The VOC trap 11 may comprise a fan 41, a filter Radio-frequency identification (RFID) sensor 42 to detect the presence of the filter, and a gas sensor 43 to detect the presence of the treatment fluid. The VOC trap 11 may be connected to the pump 3. A valve 40 may be provided on the connection between the pump 3 and the VOC trap 11 to control the flow of the treatment fluid from the treatment chamber 2 to the atmosphere.

The apparatus 1, may include a sensor 44 to detect the presence of a predetermined gas in the apparatus. The treatment chamber 2, may include a sensor 34 to detect the presence of a fluid within the treatment chamber 2.

In an example, the secondary chamber 5 may function as a reservoir to store the treatment fluid from the treatment chamber 2. Instead of releasing the exhaust gas into the atmosphere in the final recovery step, alternatively, the exhaust treatment fluid may be stored in the secondary chamber 5 for later use. When the pump 3 is initiated, it draws the exhaust fluid from the treatment chamber 2 and stores it in the secondary chamber 2 without releasing the gas outside the apparatus.

As shown in the block diagram of Figure 1A, an example of an apparatus of the present disclosure comprises: a treatment chamber 2; a pump 3 to draw a fluid from the chamber; a condenser 4 disposed between the pump and the treatment chamber to form a condensate and a non-condensate portion of the fluid; and a secondary chamber 5 to receive the non-condensate portion from the condenser to form a secondary condensate and a secondary non-condensate portion, the secondary chamber being in fluid communication with the treatment chamber to return the secondary non-condensate portion to the treatment chamber.

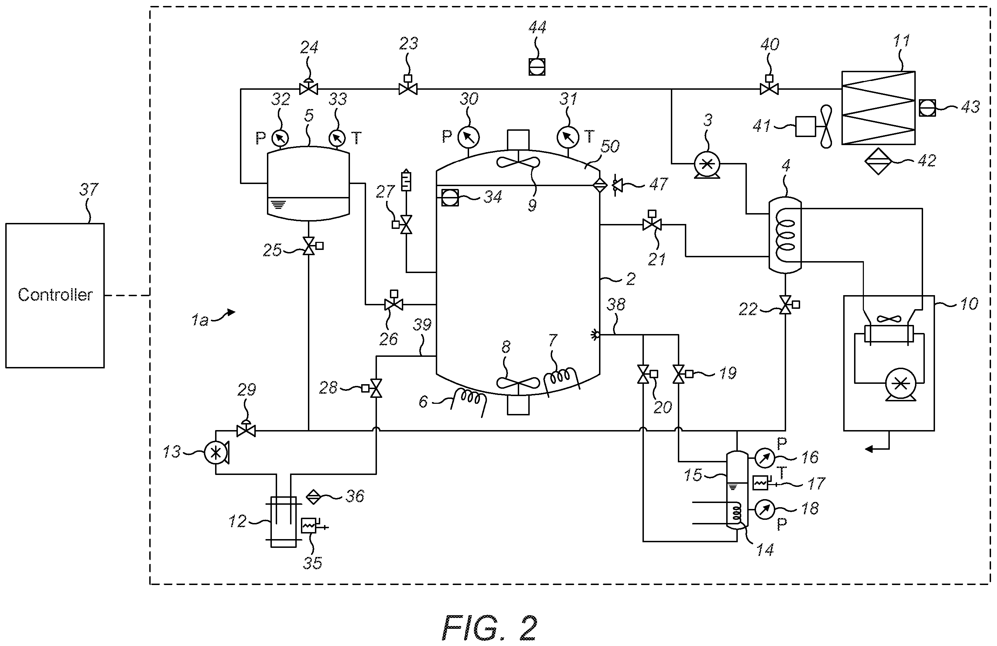

Figure 2 shows an example of a system for treating an object such as a 3D-printed polymer part. An example of the treatment includes, chemical polishing of a 3D-printed polymer part.

The example of the system as shown in Figure 2 includes the apparatus as shown in Figure 1.

The system as shown in Figure 2 includes one or a plurality of supply chambers 12 to supply a treatment agent.

In an example, the supply chamber 12 may be connected to the treatment chamber 2 directly to supply the treatment agent. A valve 28 may be provided to control the flow of the treatment agent from the supply chamber 12 via a connection 39 to the treatment chamber 2.

A sensor 36 may be provided, for example within or adjacent the supply chamber 12 to detect the level of the treatment agent in the supply chamber 12. A display 35 may be provided, for example within or adjacent the supply chamber 12 to display the level of the treatment agent inside the supply chamber 12.

The system 1a includes a heater to heat the treatment agent prior to being injected into the treatment chamber 2. This aids in accelerating the vaporization of the treatment agent inside the treatment chamber 2, thereby effecting the condensation of the agent to alter the surface of the parts to be treated.

In an example, the supply chamber 12 may be connected to a vessel 15. A pump 13 may be provided to pump the treatment agent from the supply chamber 12 to the vessel 15.A heater 14 may be provided to heat the treatment agent in the vessel 15 prior to being injected to the treatment chamber 2. A valve 29 may be provided to control the flow of the treatment agent from the supply chamber 12 to the vessel 15. The vessel 15 may be in fluid communication with the treatment chamber 2 to allow the heated treatment agent to flow to the chamber 2.

As shown in Figure 2, a valve 19 may be provided to control the flow of the treatment agent, which may be in the form of a vapor from the vessel 15 to the treatment chamber 2. A valve 20 may also be provided to control the flow of the treatment agent, which may be in the form of a heated liquid from the vessel 15 to the treatment chamber 2.

A sensor 16, 17, 18 may also be provided, for example within or adjacent the vessel 15 to detect the temperature and/or pressure within the vessel. The sensor 16 may provide at the top of the vessel and the sensor 18 may provide at the bottom of the vessel to detect the pressure at the top and/or at the bottom of the vessel 15.

The pump 13 may create sufficient pressure to allow the heated treatment agent to flow from the vessel 15 to the treatment chamber 2. The vessel 15 may be provided with a pressure sensor and a temperature sensor. A pressure sensor may be provided at the top and at the bottom of the vessel 15.

In an example, during the recovery phase, a treatment fluid in the form of a vapor from the treatment chamber 2 may be allowed to pass to the condenser 4 to form a condensate and a non-condensate portion of the treatment fluid. As shown in Figure 1, an outlet 46 may be provided to remove the condensate portion of the treatment agent from the condenser 4. A valve 22 may be provided on the outlet 46 to control the flow of the condensate from the condenser 4. The condensate portion of the treatment agent can be removed from the bottom of the condenser 4 via gravity-based transport mechanism.

The outlet 46 of the condenser 4 may be connected to the vessel 15 and the supply chamber 12. In an example, the condensate formed in the condenser 4 is returned to the vessel 15 where the treatment agent is heated for further use or returned to the supply chamber 12 to be stored for further use. The valve 22 may be opened to allow the condensate from the condenser 4 to flow to the supply chamber 12 and/or the vessel 15.

As shown in Figure 1, an outlet 45 may be provided to remove the condensate portion of the treatment fluid from the secondary chamber 5. A valve 25 may be provided on the outlet 45 to control the flow of the condensate from the secondary chamber 5. The outlet 45 of the secondary chamber 5 may be connected to the vessel 15 and the supply chamber 12.

As shown in Figure 2, the treatment chamber 2 may be provided with a lid or a sealable opening 50 to allow placement of the object to be treated inside the treatment chamber 2. A sensor to detect whether the lid 50 is open or closed may also be provided.

A holder or a support 48 may also be provided to hold the object to be treated in place inside the treatment chamber 2. Interlocks 47 may also be provided to seal the lid 50.

As shown in Figure 2, the system 1a, may include an inlet 51 to draw fresh air from the atmosphere to purge the treatment chamber 2 on completion of the process. A valve 27 may be provided to control the flow of fresh air to the treatment chamber 2. This aids in elimination of any residual treatment fluid from the treatment chamber 2.

In an example, the condensate of the treatment agent formed in the secondary chamber 5 is returned to the vessel 15 where the treatment agent is heated for further use or returned to the supply chamber 12 to be stored for further use. The valve 25 is provided to control the flow of the condensate from the secondary chamber 5 to the supply chamber 12 and the vessel 15.

Different objects may be treated using a range of different treatment agents. The choice of treatment agent may depend on the nature of the object being treated. An example of an article that may be treated includes 3D-printed polymer parts. These can be post-processed after printing by exposure to a vaporized solvent, where contact of the vaporized solvent polishes and/or smooths a surface of the 3D-printed polymer part.

The system as shown in Figure 2 may include a controller to control the operation of the system to carry out the process sequence for treatment of 3D-printed parts such as polishing of 3D-printed polymer parts as explained in the following with reference to an example of the system of Figure 2 in use.

The treatment agent used in the examples below may be a solvent or a mixture of solvents capable of dissolving, polishing and/or smoothing the surface of 3D-printed polymer parts. The treatment agent may be in the form a liquid, a gas or a mixture of liquids and/or gases.

### 1. Placement of parts in the treatment chamber

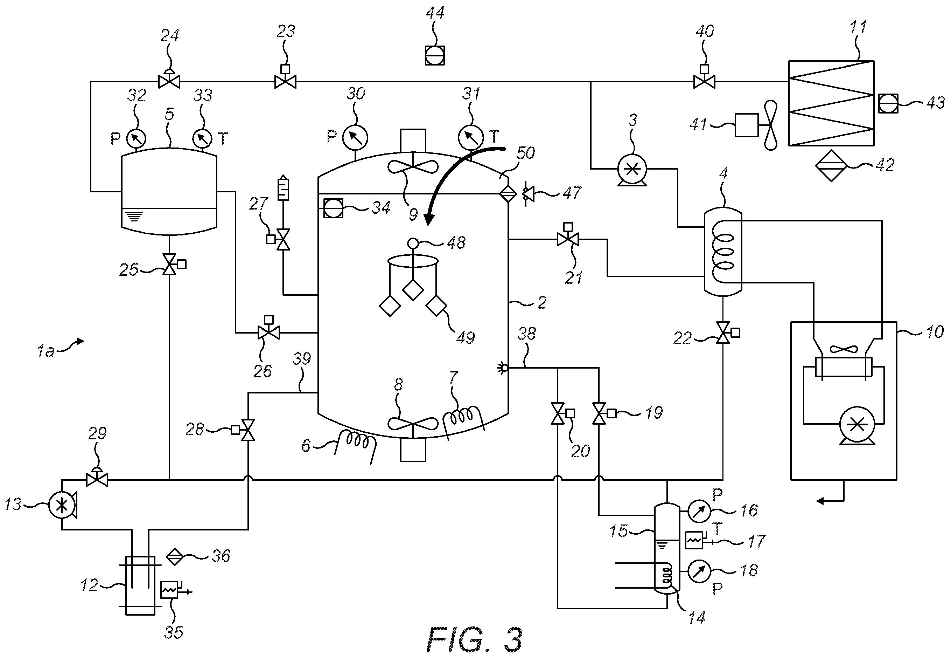

As shown in Figure 3, the lid 50 is opened to place the object, for example 3D-printed plastic parts 49 to be treated. Once the parts 49 are placed inside the treatment chamber 2, the lid 50 can be closed. Closing the lid 50 hermetically seals the treatment chamber 2. The interlocks 47 provided in the treatment chamber 2 aid in sealing the lid 50 and prevents the lid 50 from opening while the process is in operation, thus providing a safety mechanism until the treatment process is completed.

### 2. Conditioning of parts

The temperature difference between the parts to be treated and the treatment agent (such as a solvent or mixture of solvents) at injection 38 into the treatment chamber 2 may be one of the factors to be considered in controlling the process due to the different nature of material of the parts to be treated and the type of treatment agent used. In an example, parts to be treated are conditioned prior to the treatment process by controlling the temperature of the parts. This may be done by cooling the treatment chamber 2 using the condenser 4 or the chiller 10 and the pump 3 as a recirculation unit, or by raising the temperature of the treatment chamber 2 by initiating heaters 6, 7 to a predetermined temperature.

In an example, the parts 49 may be pre-treated by using a secondary chemical substance prior to the injection of the treatment agent

The conditioning process can homogenize the parts 49 (which may avoid convection) and thus keeping the temperature of the parts 49 controlled before injection of the treatment agent into the treatment chamber 2.

### 3. Pump the solvent from the supply chamber

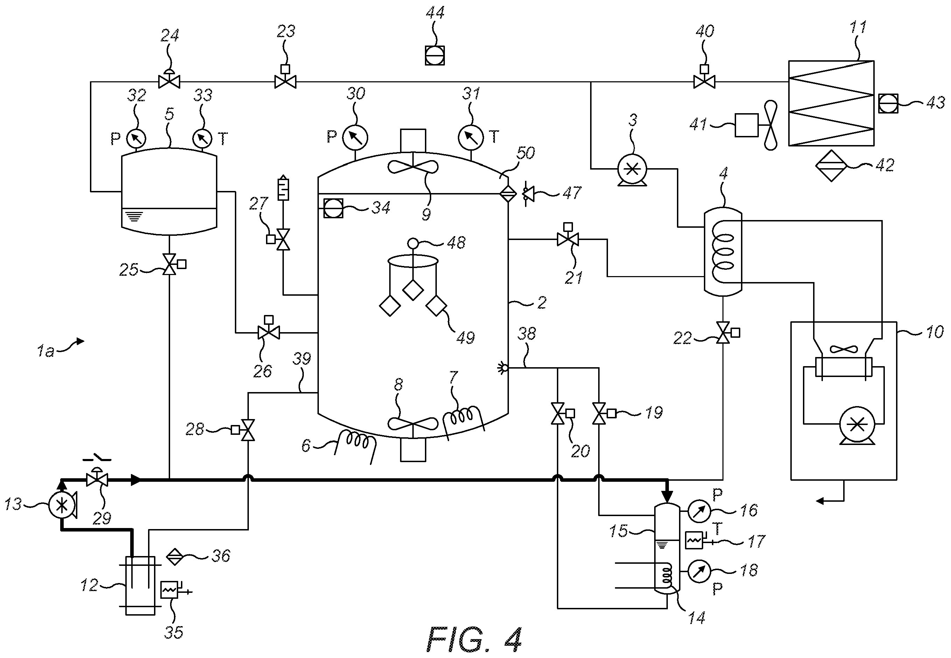

As shown in Figure 4, the pump 13 is initiated to allow the solvent to flow from the supply chamber 12 to the vessel 15. Valve 29 can be used to control the flow from the supply 12 to the vessel 15. An example of the valve 29 is a diaphragm backpressure valve, which mechanically opens the flow of the solvent once the pressure inside reaches a predetermined target value. The valve 29 is unidirectional and allows one way flow.

The required quantity of solvent for each batch of treatment or polishing is prepared in the vessel 15. If needed, the vessel 15 can be refilled by initiating the pump 13 to get a fresh supply of solvent from the supply chamber 12. The sensor 36 can detect the level of the solvent inside the chamber 12and feed the information to the controller 37.

### 4. Evacuate the treatment chamber

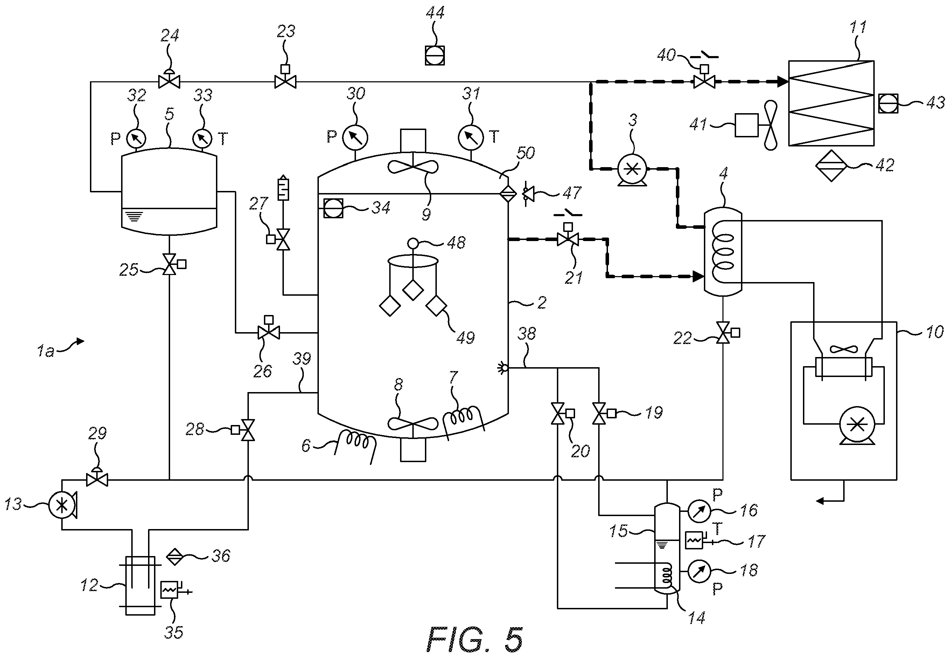

As shown in Figure 5, the pump 3 is then initiated to evacuate any fluidic contents, for example air, that may be within the treatment chamber 2 to create a predetermined negative pressure. The negative pressure formed inside the treatment chamber 2 may be in the range of about 1 bar to about 30 mbar. The value of the pressure inside the treatment chamber 2 may change after the treatment of the parts.

The level of the initial vacuum pressure inside the treatment chamber may determine the amount of air inside the system for the remaining process sequence. The required value of pressure may change depending on the type of treatment agent being used, the parts being treated and the treatment process conditions. As an example, a vacuum pressure of 30mbar can be used. In order to achieve a pressure of 30mbar the pump may take some time. Whist the pump is working to expel air from the treatment chamber, the next process sequence may be initiated.

### 5. Heat the treatment agent

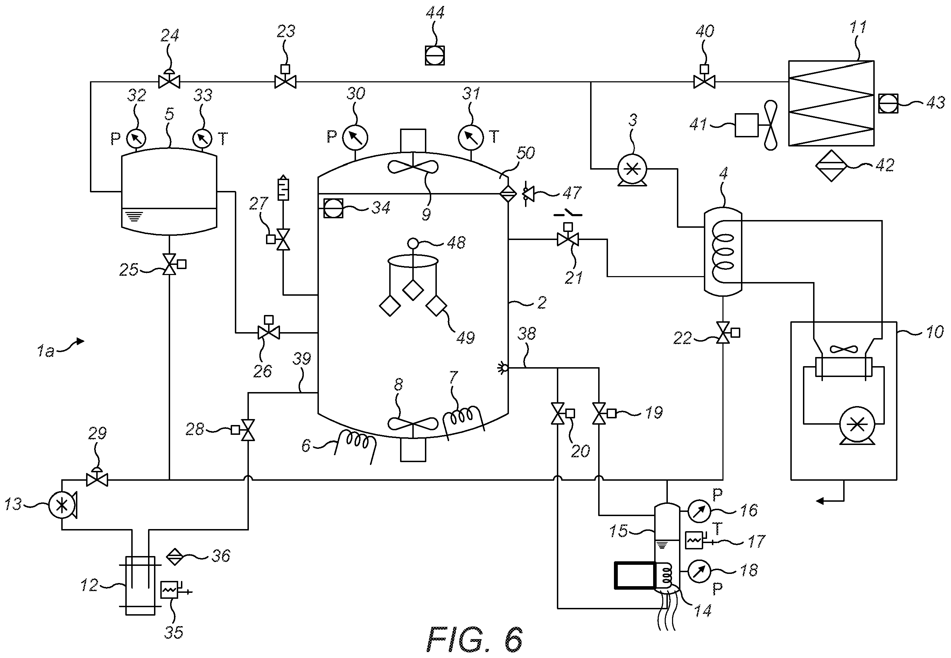

As shown in Figure 6, the solvent in the vessel 15 may be heated to a predetermined value prior to being injected into the treatment chamber 2. This facilitates condensation of the solvent on the surface of the parts to be treated. The temperature of the solvent combined with the vacuum pressure inside the treatment chamber 2 maximizes the vaporization of solvent inside the treatment chamber 2.

In an example, the heater 14 is initiated to heat the solvent in the vessel 15 to a temperature of 85ºC at a pressure of 2.2 bar. The temperature and the pressure may be determined based on the type of the treatment agent being used and the parts being treated.

In an example, the temperature and pressure inside the vessel 15 may be increased such that the solvent may vaporize.

Sensor 16, 17, 18 provided on the vessel 15 can detect the temperature and the pressure inside the vessel 15 and feed this information to the controller 37.

### 6. Turn on the chiller

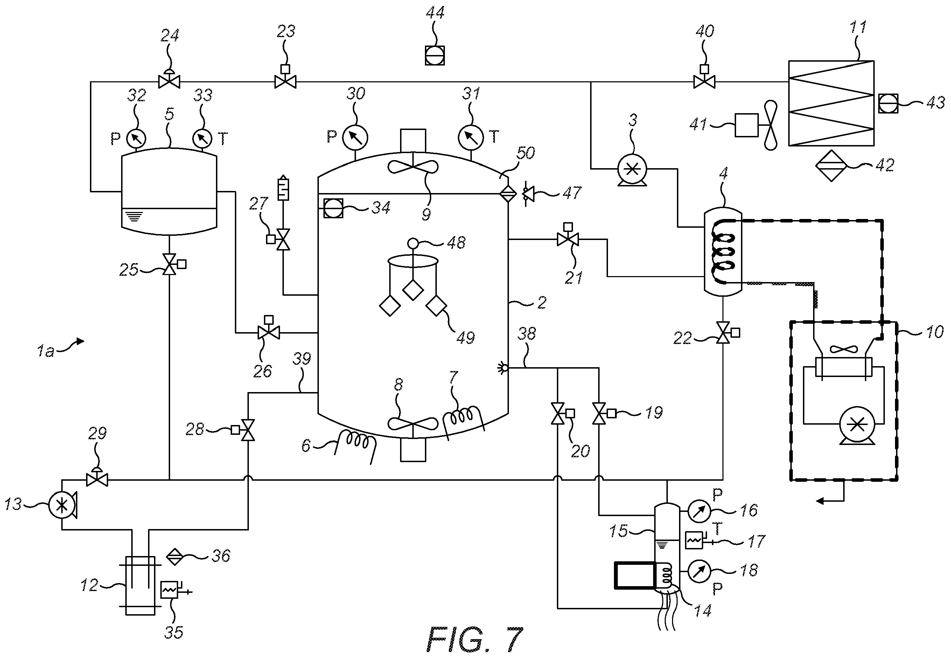

As shown in Figure 7, the chiller 10 is initiated to cool the treatment chamber 2. The chiller 10 may also be initiated to cool the parts 49 to be treated inside the chamber 2 to a predetermined temperature.

For example, the chiller 10 may be initiated prior to the process of treating the parts to adjust the temperature of the parts 49 to be treated in order to effect condensation of the solvent on to the surface of the parts 49 to be treated. In this way, it enhances the condensation process when the hot solvent vapor comes in contact with the surface of the parts to be treated under pressure. Likewise, if the parts to be treated are cold, the temperature of the parts may be increased by initiating the heater 6 and/or heater 7 to warm the parts prior to the treatment process.

### 7. Pre-heat the treatment chamber

The walls of the treatment chamber 2 may be heated prior to the treatment process, during the treatment process or after the treatment process in order to prevent condensation of any vaporised treatment agent on the walls of the treatment chamber 2.

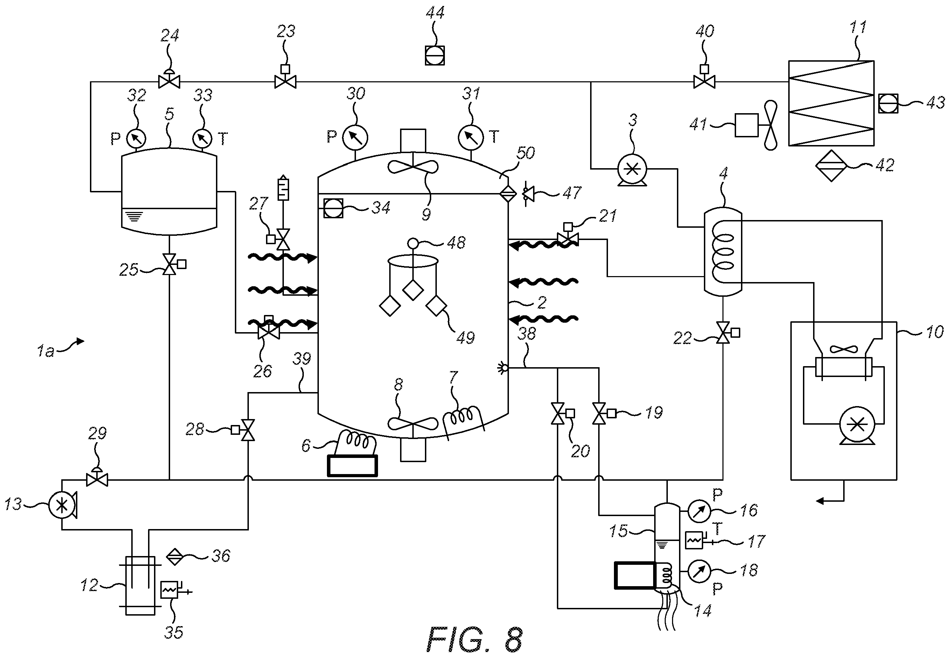

As shown in Figure 8, simultaneously the treatment chamber 2 may be heated using the heater 6 and/or heater 7 to a predetermined temperature. This prevents solvent condensation on the walls of the treatment chamber 2. This may also facilitate to maximize the amount of solvent available for the treatment process.

### 8. Inject the solvent into the treatment chamber

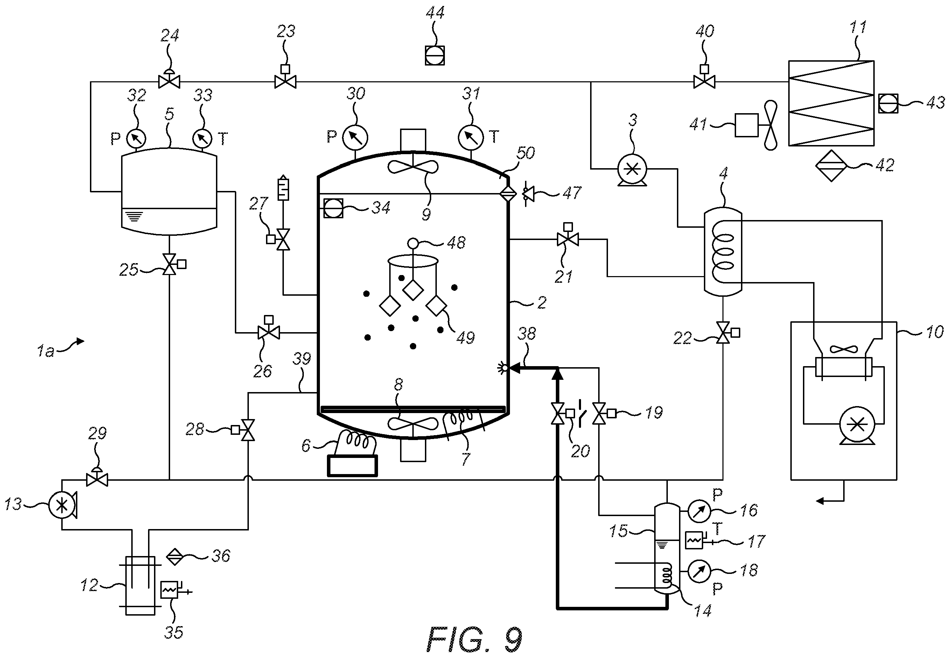

Once the temperature and vacuum pressure inside the treatment chamber 2 reach a predetermined target value, either the heated liquid solvent or the vaporized solvent or both can be injected into the treatment chamber 2. The heated liquid solvent is allowed to flow to the treatment chamber 2 by opening the valve 20. The pump 13 may also provide sufficient pressure such that when the valve 20 is opened the liquid solvent flows from the vessel 15 to the treatment chamber 2 as shown in Figure 9.

The vaporized solvent in the vessel 15 may be allowed to flow to the treatment chamber 2 by opening the valve 19.

Since the treatment chamber 2 is in a vacuum condition, opening the valves 19 and/or 20 may also allow the solvent to flow to the treatment chamber 2. The pressure inside the treatment chamber 2 may increase due to the solvent injection. For example, the pressure could be about 300mbar. This pressure can vary depending upon the type and nature of the treatment agent and the conditions inside the treatment chamber 2.

### 9. Treatment of the parts inside the treatment chamber

Due to the pressure difference in the treatment chamber 2, the injected solvent may boil and vaporize immediately.

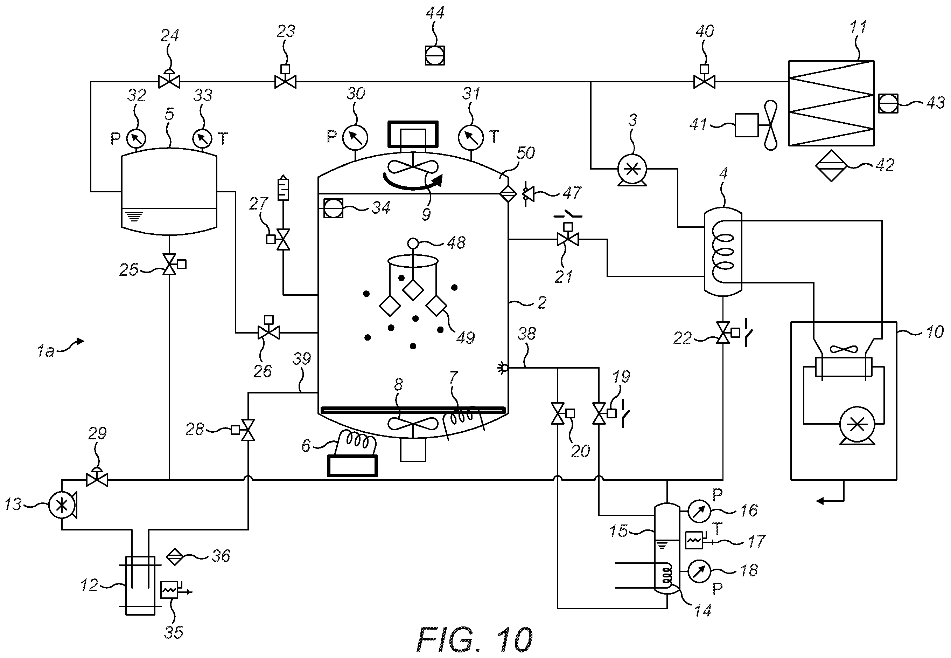

As shown in Figure 10, the solvent vapor is stirred inside the treatment chamber 2 by initiating the disperser 9 for a sufficient amount of time. For example, about 1-10 minutes. At this stage, the walls of the treatment chamber 2 are also being heated with the aid of the heater 6. This facilitates to create an atmosphere inside the treatment chamber 2 during the treatment phase to be close to the saturation point of the solvent.

During the treatment phase, the pressure inside the treatment chamber may change. In order to control the pressure inside the vessel 15, treatment chamber 2, and the condenser 4, the valves 19, 21 and 22 are opened from time to time. This may aid in preventing undesired flow effects in the system.

Sensors 30 and 31 provided on the treatment chamber 2 can detect the temperature and pressure inside the chamber 2 and feed the information to the controller 37 to control the operation of the valves 21, 22 and 19.

During the treatment phase, the vaporized solvent condenses onto the surface of the parts to be treated and dissolves the external layer of the parts thereby polishing and smoothing the surface of the parts. The time taken to complete the treatment process depends on the level of polishing and smoothing desired.

### 10. Drying of the treated parts and vapor extraction

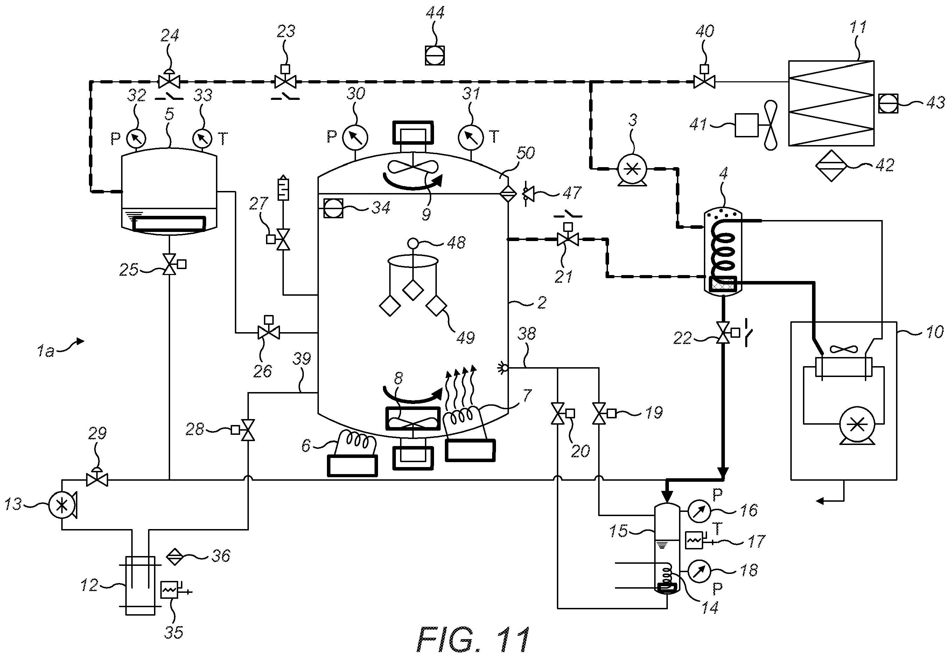

Once the treatment process is completed, as shown in Figure 11 the valves 19 and 20 are closed to stop the supply of the solvent to the treatment chamber 2.

At this stage, the valve 21 is opened to allow a treatment fluid to flow from the treatment chamber 2 to the condenser 4. For example, the treatment fluid may be an exhaust vapor which may comprise the solvent and air present in the treatment chamber 2.

The treated parts may now be allowed to dry. The drying phase includes extraction of the treatment fluid from the treatment chamber 2 under vacuum pressure by initiating the pump 3. For example, the vacuum pressure applied may be about 100 mbar. The pump 3 draws the treatment fluid from the treatment chamber 2 to the condenser 4.

The extracted treatment fluid is allowed to condense in the condenser 4 to recover the solvent from the treatment fluid. The treatment fluid is allowed to condense in the condenser 4 to form a condensate (solvent) and a non-condensate portion of the treatment fluid. The chiller 10 may be initiated at this stage. The outlet 46 of the condenser 4 may be connected to the vessel 15 and the supply chamber 12.

As shown in Figure 11, the condensate from the condenser 4 is allowed to flow to the vessel 15 for further use by opening the valve 22.

Alternatively, the condensate comprising the solvent from the condenser 4 is allowed to flow to the supply chamber 12 to be stored for later use.

The non-condensate portion of the treatment fluid is removed by the pump 3 and allowed to flow to the secondary chamber 5 by opening the valve 23. At this stage, valve 40 is closed.

The non-condensate portion from the condenser 4 may be further condensed in the secondary chamber 5 due to the pressure difference. For example, the secondary chamber 5 being smaller in size allows for natural condensation due to the increased pressure in the decreased size of the secondary chamber 5.

Sensors 32 and 33 can detect the pressure and temperature inside the secondary chamber 5 and feeds the information to the controller 37.

Simultaneously, during the extraction phase, the surface of the parts 49 which has been treated may start to dry since the solvent vapor in the treatment chamber 2 starts disappearing due to the removal of the treatment fluid.

As shown in Figure 11, the heater 7 and the fan 8 are initiated to facilitate the vaporization of any residual portion of the solvent that may have collected at the bottom of the treatment chamber 2 during the treatment phase.

The heater 7 may aid in heating any residual solvent collected at the bottom of the treatment chamber 2 during the treatment phase to vaporize the residual solvent and the disperser 8 may aid in dispersing or circulating the vaporized residual solvent. In this way, the vaporization of any residual portion of the solvent in the treatment chamber 2 becomes more effective. Furthermore, the provision of the internal heater 7 and the disperser 8 at the bottom of the treatment chamber 2 aids in maximum recovery of the solvent once the treatment phase is completed.

### 11. Recovery of the solvent from the secondary chamber

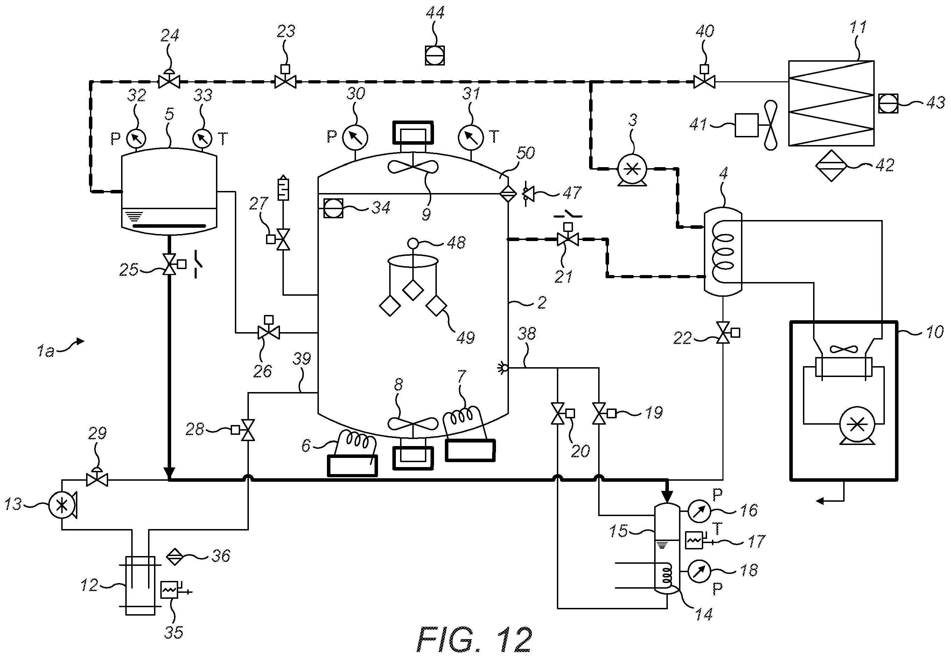

As shown in Figure 12, the valve 23 is closed. The condensate formed inside the secondary chamber 5 is allowed to flow to the vessel 15 by opening the valve 25.

Alternatively, the condensate from the secondary chamber 5 may be allowed to flow to the supply chamber 12 to be stored for later use.

The non-condensate portion of the treatment fluid in the secondary chamber 5 may have a low concentration of the solvent compared to the treatment fluid which is a mixture of gases inside the treatment chamber 2. The absolute concentration of solvent in the secondary chamber 5 may be lower than the treatment chamber 2, since pressure inside the secondary chamber 5 is higher than the pressure inside the treatment chamber 2. For example, the pressure inside the secondary chamber 5 may be similar to atmospheric pressure whereas the pressure inside the treatment chamber 2 is below the atmospheric pressure. The higher pressure in the secondary chamber 5 increases the boiling point of the treatment fluid and facilitates natural condensation of the solvent.

### 12. Recycling of the treatment fluid

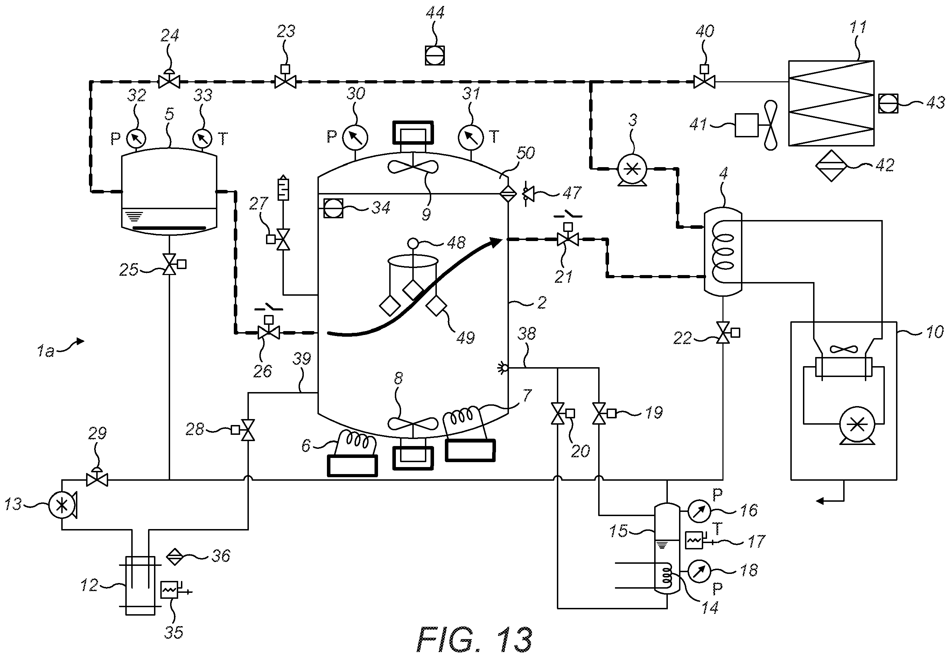

As shown in Figure 13, the final recovery of the solvent from the treatment fluid may be carried out by returning the non-condensate portion of the treatment fluid in the secondary chamber 5 to the treatment chamber 2.

The secondary chamber 5 may be designed such that in use the pressure in the treatment chamber 2 is lower than the pressure in the secondary chamber 5. For example, the pressure inside the secondary chamber may be 1 bar and the pressure inside the treatment chamber 2 may be 30mbar. This pressure can vary.

Due to the pressure difference the non-condensate portion from the secondary chamber 5 flows to the treatment chamber 2, when the valve 26 is opened. The valve 24 helps in preventing the outlet of the pump 3 from being exposed directly to vacuum pressure. When the valve 23 is open and valves 26 and 40 are closed, the flow from the pump 3 may reduce the pressure inside the treatment chamber 2 and increases the pressure inside the secondary chamber 5. The ratio of pressures is proportional to volumes and temperatures of the treatment chamber 2 and the secondary chamber 5. Once the condensate portion is recovered from the secondary chamber 5, the valve 26 can be opened so the pressure inside the treatment chamber 2 and the secondary chamber 5 are equalized. As a result of recycling the non-condensate portion of the treatment fluid from the secondary chamber 5 which has a low concentration of solvent, the solvent concentration in the treatment chamber 2 may be reduced.

The recycling of the treatment fluid via the secondary chamber 5 may be repeated a number of times, until the drying phase is completed. In this way, the concentration of the solvent in the treatment chamber 2 may be reduced, which may aid in the drying of the treated parts.

The pump 5 may then be started again to extract the remaining fluid inside the treatment chamber 2. The pump 4 may be a volumetric system which blows a volume inside the treatment chamber.

The non-condensate portion of the treatment fluid from the condenser 4 may be recycled via the secondary chamber 5 to the treatment chamber 2 in a closed cycle a number of times to maximize the recovery of the solvent from the treatment fluid before being disposed into the atmosphere.

After recycling the treatment fluid for a sufficient number of times, the treatment fluid disposed into the atmosphere via a filter may have a minimal or no traces of any solvent or treatment agent and thus, the recovery system of the present disclosure is also safe and environmental friendly.

The closed cycle extraction of solvent from the treatment fluid via the condenser 4 and the secondary chamber 5 may provide a recovery system which efficiently recovers the solvent after the treatment phase, without having to use an elaborate and expensive recovery equipment for removing the exhaust fluid from the system after the treatment phase is completed.

Furthermore, the use of the secondary chamber aids in recovering any remaining solvent from the treatment fluid after the condenser reaches its maximum limit.

### 13. Purging air into the system

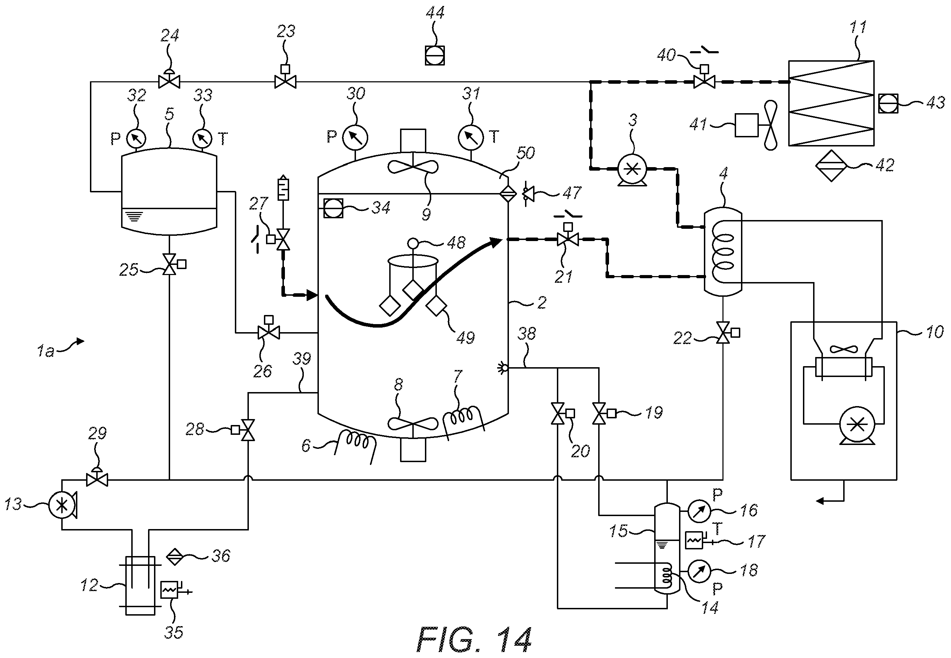

As shown in Figure 14, in the final stage air from the atmosphere is introduced into the treatment chamber 2 by opening the valve 27 in order to purge the treatment chamber 2 to remove all residual treatment fluid. The remaining treatment fluid may be evacuated from the treatment chamber 2 by using the pump 3 and allowed to pass through the VOC filter 11 into the atmosphere. At this stage, valve 23 is closed and valve 40 is opened so that the remaining treatment fluid flows to the VOC filter 11 instead of the secondary chamber 5.

The heaters and the condenser may be turned off. The purge process sequence may be repeated as appropriate.

### 14. Removal of treated parts

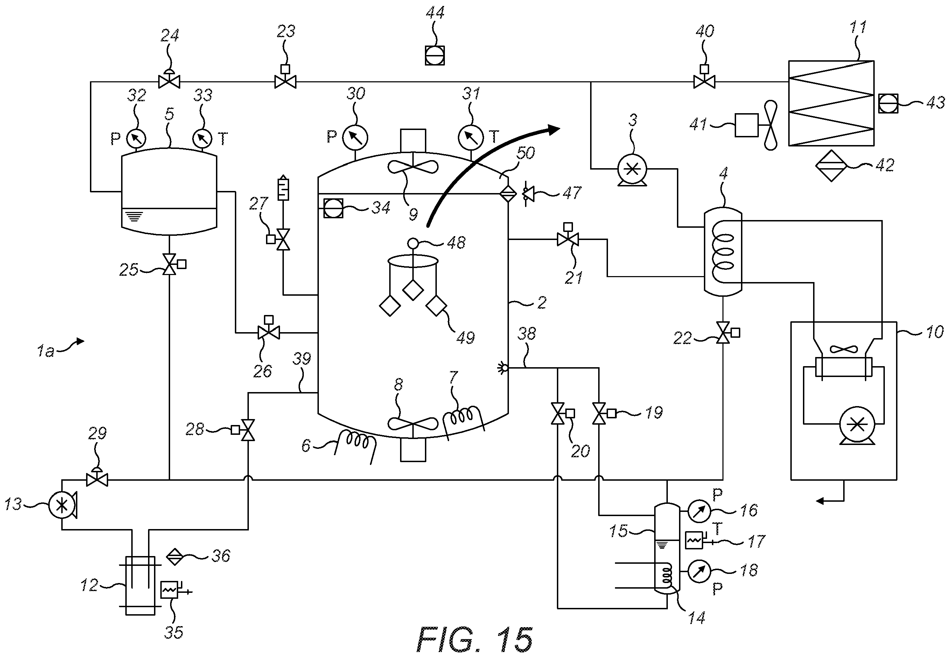

As shown in Figure 15, the system may be switched off and the treated parts 49 are removed by opening the lid 50.

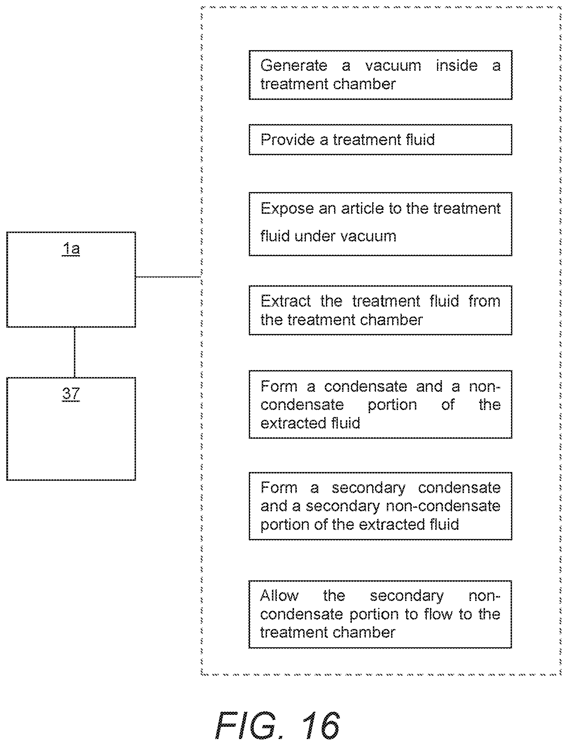

As shown in Figure 16, in one example, the controller 37 may cause the system 1a to generate a vacuum or a partial vacuum inside a treatment chamber; provide a treatment fluid; expose an article to the treatment fluid under vacuum to alter a surface of the article; extract the treatment fluid from the treatment chamber; form a condensate and a non-condensate portion of the extracted fluid; form a secondary condensate and a secondary non-condensate portion of the extracted fluid in a secondary chamber which is in fluid communication with the treatment chamber; and allow the secondary non-condensate portion to flow to the treatment chamber.

The controller 37 could be a personal computer (PC), programmable logic controller (PLC), microprocessor or the like, and could be integral with the system, or remote from the system and in cabled or wireless communication with the system. A plurality of sensors may be provided, which detect a range of different conditions such as temperature, pressure, status and sensors are in communication with the controller 37 directly or indirectly. The controller 37 may control the sensors.

A sensor to detect a status or presence of a substance may be also be provided.

A plurality of controllers may be provided, which controls various functions in the system. A controller may be provided to control the opening and closing of the various valves in the system based on the conditions in the system. For example, solenoid/pneumatic valve control may be provided. An example of valves include electro-valves.

A controller may also be provided to control the heater 6, 7, 14 in the system.

A controller may be provided to control the dispersers 8, 9 (motor/fan PWM drive) in the system.

For example, referring to Figure 2, the sensor 30, for example, could be disposed to detect pressure of the treatment chamber 2. In some examples, including examples where the object to be treated is a 3D-printed polymer part and the treatment agent is a solvent, the treatment chamber 2 may be kept at a negative pressure in order to vaporize the solvent. The pressure sensor 30 can detect a change in pressure. The sensor may feed the change in pressure to the controller 37, which may act to control the pressure.

For example, referring to Figure 2, the sensor 31, for example, could be disposed to detect the temperature within the treatment chamber 2. The sensor 31 may feed the temperature back to the controller 37, which could act to regulate the temperature. For example, the system could comprise a heater 6 and the controller 37 could act to control the heater 6 to regulate the temperature. Alternatively, the system could comprise a thermostat to control the temperature within the treatment chamber 2.

In examples, where the treatment agent is heated prior to being injected into the treatment chamber 2, the sensor 17 disposed on the vessel 15 can detect the temperature in the vessel and feed the data on the temperature to the controller 37, and the controller 37 could act to control the heater 14 to regulate the temperature. Sensors 16 and 17 could be disposed at the top and bottom of the vessel 15 can detect pressure and may feed the change in pressure in the vessel 15 to the controller 37, which may act to control the pressure.

For example, referring to Figure 2, sensors 32 and 33, could be disposed to detect pressure and temperature of the secondary chamber 5. The sensors may feed the change in pressure and temperature in the secondary chamber 5 to the controller 37, which may act to control the pressure and temperature.

For example, the controller 37 may also initiate the pump 3 to draw fluid from the treatment chamber 2, circulate the treatment fluid from the treatment chamber 2 to the secondary chamber 5 in a loop, or remove the treatment fluid to disperse to the atmosphere. Further, the controller 37 may be programmed to cease the pump 3 when a predetermined treatment time has been reached.

There may also be provided a non-transitory machine-readable storage medium which may be encoded with instructions executable by a controller 37. The machine-readable storage may be any electronic, magnetic, optical or other physical storage device that stores executable instructions. Thus, machine-readable storage medium may be, for example, Random Access Memory (RAM), an Electrically-Erasable Programmable Read-Only Memory (EEPROM), a storage drive, and optical disc, and the like.

## Claims

1. An apparatus (1) comprising:
a treatment chamber (2);
a pump (3) to draw a fluid from the chamber;
a condenser (4) disposed between the pump (3) and the treatment chamber (2) to form a condensate and a non-condensate portion of the fluid; and
a secondary chamber (5) to receive the non-condensate portion from the condenser (4) to form a secondary condensate and a secondary non-condensate portion, the secondary chamber (5) being in fluid communication with the treatment chamber to return the secondary non-condensate portion to the treatment chamber (2).

2. The apparatus as claimed in claim 1, wherein the treatment chamber comprises at least one heater (6) and at least one disperser (8).

3. The apparatus as claimed in claim 2, wherein the heater and the disperser is disposed inside at the base of the chamber.

4. The apparatus as claimed in claim 1, wherein the secondary chamber and the condenser comprise an outlet (46) to remove the condensate portion of the fluid.

5. The apparatus as claimed in claim 1, wherein the secondary chamber is substantially smaller than the chamber.

6. The apparatus as claimed in claim 1, further comprising a controller (37) to control the operation of the apparatus.

7. The apparatus as claimed in claim 6, wherein the controller (37) is to:
generate a vacuum or a partial vacuum inside the treatment chamber (2);
provide a treatment fluid;
expose an article to the treatment fluid under vacuum to alter a surface of the article;
extract the treatment fluid from the treatment chamber;
form a condensate and a non-condensate portion of the extracted fluid;
form a secondary condensate and a secondary non-condensate portion of the extracted fluid in a secondary chamber (5) which is in fluid communication with the treatment chamber (2); and
allow the secondary non-condensate portion to flow to the treatment chamber.

8. The apparatus according to claim 7, wherein the controller (37) causes the apparatus to heat the treatment fluid prior to being injected to the treatment chamber.

9. The apparatus according to claim 7, wherein the controller (37) causes the apparatus to condition the article prior to the treatment by controlling the temperature of the article using the condenser or a heater.

10. The apparatus according to claim 7, wherein the article is a 3D printed part and the treatment fluid is a solvent capable of altering the surface of the article.

11. The apparatus according to claim 7, wherein the controller is a personal computer (PC), programmable logic controller (PLC) or a microprocessor.

## Patentansprüche

1. Vorrichtung (1), umfassend:
eine Behandlungskammer (2);
eine Pumpe (3) zum Absaugen eines Fluids aus der Kammer;
einen Kondensator (4), der zwischen der Pumpe (3) und der Behandlungskammer (2) angeordnet ist, um einen Kondensatanteil und einen Nicht-Kondensatanteil des Fluids zu bilden; und
eine sekundäre Kammer (5) zum Aufnehmen des Nicht-Kondensatanteils aus dem Kondensator (4), um einen sekundären Kondensatanteil und einen sekundären Nicht-Kondensatanteil zu bilden, wobei die sekundäre Kammer (5) in Fluidverbindung mit der Behandlungskammer steht, um den sekundären Nicht-Kondensatanteil zur Behandlungskammer (2) zurückzuführen.

2. Vorrichtung nach Anspruch 1, wobei die Behandlungskammer mindestens eine Heizeinrichtung (6) und mindestens einen Dispergierer (8) umfasst.

3. Vorrichtung nach Anspruch 2, wobei die Heizeinrichtung und der Dispergierer innen am Boden der Kammer angeordnet sind.

4. Vorrichtung nach Anspruch 1, wobei die sekundäre Kammer und der Kondensator einen Auslass (46) zum Entfernen des Kondensatanteils des Fluids umfassen.

5. Vorrichtung nach Anspruch 1, wobei die sekundäre Kammer wesentlich kleiner als die Kammer ist.

6. Vorrichtung nach Anspruch 1, ferner eine Steuerung (37) zum Steuern des Betriebs der Vorrichtung umfassend.

7. Vorrichtung nach Anspruch 6, wobei die Steuerung (37) dient zum:
Erzeugen eines Vakuums oder Teilvakuums im Inneren der Behandlungskammer (2);
Bereitstellen eines Behandlungsfluids;
Inkontaktbringen eines Artikels mit dem Behandlungsfluid unter Vakuum, um eine Oberfläche des Artikels zu verändern;
Abziehen des Behandlungsfluids aus der Behandlungskammer;
Bilden eines Kondensatanteils und eines Nicht-Kondensatanteils des abgezogenen Fluids;
Bilden eines sekundären Kondensatanteils und eines sekundären Nicht-Kondensatanteils des abgezogenen Fluids in einer sekundären Kammer (5), die in Fluidverbindung mit der Behandlungskammer (2) steht; und
Ermöglichen, dass der sekundäre Nicht-Kondensatanteil in die Behandlungskammer strömt.

8. Vorrichtung nach Anspruch 7, wobei die Steuerung (37) die Vorrichtung dazu veranlasst, das Behandlungsfluid zu erwärmen, bevor es in die Behandlungskammer eingespritzt wird.

9. Vorrichtung nach Anspruch 7, wobei die Steuerung (37) die Vorrichtung veranlasst, den Artikel vor der Behandlung zu konditionieren, indem sie die Temperatur des Artikels unter Verwendung des Kondensators oder einer Heizeinrichtung regelt.

10. Vorrichtung nach Anspruch 7, wobei der Artikel ein 3D-gedrucktes Teil ist und das Behandlungsfluid ein Lösungsmittel ist, das imstande ist, die Oberfläche des Artikels zu verändern.

11. Vorrichtung nach Anspruch 7, wobei die Steuerung ein Personal Computer (PC), eine speicherprogrammierbare Steuerung (SPS) oder ein Mikroprozessor ist.

## Revendications

1. Appareil (1) comprenant :
une chambre de traitement (2) ;
une pompe (3) pour extraire un fluide de la chambre ;
un condenseur (4) disposé entre la pompe (3) et la chambre de traitement (2) pour former un condensat et une partie autre que le condensat du fluide ; et
une chambre secondaire (5) pour recevoir la partie autre que le condensat du condenseur (4) pour former un condensat secondaire et une partie autre que le condensat secondaire, la chambre secondaire (5) étant en communication fluidique avec la chambre de traitement pour renvoyer la partie autre que le condensat secondaire dans la chambre de traitement (2).

2. Appareil selon la revendication 1, dans lequel la chambre de traitement comprend au moins un dispositif de chauffage (6) et au moins un disperseur (8).

3. Appareil selon la revendication 2, dans lequel le dispositif de chauffage et le disperseur sont disposés à l'intérieur au niveau de la base de la chambre.

4. Appareil selon la revendication 1, dans lequel la chambre secondaire et le condenseur comprennent une sortie (46) pour éliminer la partie condensat du fluide.

5. Appareil selon la revendication 1, dans lequel la chambre secondaire est sensiblement plus petite que la chambre.

6. Appareil selon la revendication 1, comprenant en outre un dispositif de commande (37) pour commander le fonctionnement de l'appareil.

7. Appareil selon la revendication 6, dans lequel le dispositif de commande (37) est destiné à :
générer un vide ou un vide partiel à l'intérieur de la chambre de traitement (2) ;
fournir un fluide de traitement ;
exposer un article au fluide de traitement sous vide pour altérer une surface de l'article ;
extraire le liquide de traitement de la chambre de traitement ;
former un condensat et une partie autre que le condensat du fluide extrait ;
former un condensat secondaire et une partie autre que le condensat secondaire du fluide extrait dans une chambre secondaire (5) qui est en communication fluidique avec la chambre de traitement (2) ; et
permettre à la partie autre que le condensat secondaire de s'écouler vers la chambre de traitement.

8. Appareil selon la revendication 7, dans lequel le dispositif de commande (37) amène l'appareil à chauffer le fluide de traitement avant de l'injecter dans la chambre de traitement.

9. Appareil selon la revendication 7, dans lequel le dispositif de commande (37) amène l'appareil à conditionner l'article avant le traitement en commandant la température de l'article à l'aide du condenseur ou d'un dispositif de chauffage.

10. Appareil selon la revendication 7, dans lequel l'article est une pièce imprimée en 3D et le fluide de traitement est un solvant apte à altérer la surface de l'article.

11. Appareil selon la revendication 7, dans lequel le dispositif de commande est un ordinateur personnel (PC), un contrôleur logique programmable (PLC) ou un microprocesseur.
